# EUROPEAN PATENT APPLICATION

(11) **EP 3 202 663 A1**
(43) Date of publication of application: **09.08.2017**
(21) Application number: 17154657.5
(22) Date of filing: 03.02.2017
(51) Int. Cl.: B64D 11/06, B65D 77/38, B65D 75/60

(54) **LIFE VEST POUCH**

(30) Priority: 05.02.2016 GB 201602085
(71) Applicant: Acro Aircraft Seating Limited, Crawley, West Sussex RH11 0PR (GB)
(72) Inventor: BALL, Steven Nicholas, Crawley, West Sussex RH11 0PR (GB); BRADY, Christopher James, Crawley, West Sussex RH11 0PR (GB); LONGDEN, Martin, Rugby, West Sussex CV23 8HB (GB)
(74) Representative: Sweetinburgh, Mark Roger

(57) **Abstract**

Described herein is a life vest pouch for storage under an aircraft seat. The life vest pouch includes a closeable first opening for inserting a life vest into the pouch and a breakable seam for creating a second opening and permitting removal of a life vest from the pouch. Also described is an airline seat and row of airline seats comprising the life vest pouch.

## Description

The present invention relates to life vest pouches, in particular to life vest pouches for use in aircraft.

Life vests are typically found within a pouch attached to the underside of a passenger seat in an aircraft. In the event that a life vest is needed, an occupant of the seat pulls on a tag at the front of the pouch to open the pouch. The life vest can then be removed from the pouch and worn by the occupant of the seat.

Whilst known pouches provide convenient storage of life vests and ease of access in the event of an emergency, they suffer from a number of drawbacks.

There exists a risk that the current storage of life vest pouches allows the pouches to be tampered with and the life vest either removed and/or replaced with another object, such as an explosive device. Accordingly, before each flight all life vest pouches on an aircraft must be checked to ensure that they have not been tampered with and that they do, in fact, contain a life vest and nothing else. This represents a considerable time burden on aircraft personnel.

It is, therefore, an object of the present invention to seek to alleviate the above identified problems.

### SUMMARY OF THE INVENTION

According to one aspect of the present invention, there is provided a life vest pouch for storage under an aircraft seat, the life vest pouch comprising a closeable first opening for inserting a life vest into the pouch and a breakable seam for creating a second opening and permitting removal of a life vest from the pouch.

In use, a life vest is inserted into the pouch through the first opening and the first opening is then closed. The pouch can then be stored under an aircraft seat, preferably secured to the underside of an aircraft seat, with the breakable seam positioned to allow removal of the life vest when the seam is broken.

Preferably, the pouch comprises a tag for causing the breakable seam to break when a user pulls on the tag.

Once the breakable seam has been broken, it will be immediately evident to someone inspecting the pouch that it has been opened. In particular, because a breakable seam cannot be resealed once it has been broken, it is not possible to hide the fact that the seam has been broken because it is not possible to restore the pouch to its original appearance. This is particularly advantageous in the context of the problems identified with known pouches because it is not possible to restore the pouch to its original appearance and hide the absence of a life vest and/or presence of another item such as an explosive device.

Preferably, the breakable seam comprises stitching.

Preferably, the breakable seam comprises stitching that can be broken by application of a known force, for example a force that would typically be applied by a user pulling on a tab provided on the panel.

Preferably, the breakable seam comprises perforations.

Preferably, the first opening comprises a tamper evident closure.

Preferably, the first opening comprises a zip.

Preferably, the first opening comprises a tamper evident zip.

Preferably, the zip comprises a tamper evident seal. For example, a tab may be provided at one end of the first opening for attachment to the zip slider when the zip is in a closed configuration. It will be clear to someone inspecting the first opening that the zip has been opened if the tab has been broken.

Preferably, the first opening is permanently closeable. Put another way, once the first opening has been closed, it cannot then be re-opened.

This is particularly advantageous, because there is no need to provide the first opening with a tamper evident closure. Once a life vest has been inserted into the pouch and the first opening permanently closed, the life vest can only be removed from the pouch through the second opening.

Preferably, the first opening comprises a unidirectional zip moveable from an open to a closed configuration only.

Preferably, the first opening comprises a permanent seal.

Preferably, the permanent seal comprises an adhesive.

Preferably, the first opening comprises a zip and one or more adhesive strips positioned to prevent movement of the zip from a closed configuration to an open configuration.

Preferably, at least one internal surface of the life vest pouch is visually distinct from the external surface of the life vest pouch.

Preferably, at least one internal surface of the life vest pouch is provided in a first colour and the external surface of the life vest pouch is provided in a different colour.

Preferably, the first colour is different to the second colour.

Preferably, the first colour and second colour are contrasting colours.

Preferably, the first colour is a high visibility colour.

Preferably, the first colour is fluorescent.

Preferably, the at least one internal surface of the life vest pouch is visible when the seam is broken.

Preferably, the pouch comprises a second opening closure means removable from the pouch when the seam is broken and positionable over and/or across the second opening.

Preferably, the closure means comprises a cover positionable over and/or across the second opening.

Preferably, the closure means is for covering the second opening after removal or opening of the panel.

Preferably, the closure means comprises a hinged closure panel moveable from a first position within the pouch to a second position across the second opening. As such, it is preferred that the second opening closure means comprises a flap.

Preferably, the closure means comprises a securing means for securing the closure means across the second opening.

Preferably, the securing means comprises one or more lengths of Velcro securable to strips of Velcro positioned on the pouch, for example on the outside of the pouch and/or at or near an edge of the second opening.

Preferably, a first piece or strip of Velcro is provided on the closure means and a second piece or strip of Velcro is provided on the pouch.

Preferably, the closure means comprises a hinged closure panel moveable from a first position within the pouch to a second position across the second opening, said panel being hinged at a first side of the second opening and securable to the opposite side of the opening by the securing means.

Preferably, the closure means is substantially rectangular.

Preferably, the closure means comprises a tab for positioning the closure means over and/or across the second opening.

Preferably, the closure means is visually distinct from the external surface of the life vest pouch.

Preferably, the closure means is provided in a first colour and the external surface of the life vest pouch is provided in a different colour.

Preferably, the first colour is different to the second colour.

Preferably, the first colour and second colour are contrasting colours.

Preferably, the first colour is a high visibility colour.

Preferably, the first colour is fluorescent.

The provision of a closure means in a different colour to the outside colour of the pouch means that, whilst the pouch can be reused to hold a life vest after the seam has been broken, it is still clearly visible to aircraft personnel that the seam has been broken and a life vest has, at some point, been removed from the pouch. This means it is very clear to aircraft personnel that the pouch should be checked.

Preferably, the breakable seam defines a panel.

Preferably, the breakable seam defines a removable panel.

Preferably, the second opening is formed upon removal of the panel.

Preferably, the breakable seam defines a hinged panel. Preferably, the second opening is formed when the hinged panel is opened.

Preferably, the pouch is substantially cuboidal in shape.

Preferably, the pouch is substantially cuboidal in shape, the first opening is provided along one or more edges of the pouch and the second opening is provided along a different edge of the pouch.

Preferably, the pouch is substantially cuboidal in shape, the first opening is provided along one edge of the pouch and the second opening is formed by a breakable seam positioned along at least three edges of a panel of the pouch.

Preferably, the breakable seam is positioned along four edges of a panel of the pouch.

In another aspect of the present invention, there is provided a life vest pouch as described herein comprising a life vest.

In another aspect of the present invention, there is provided an airline seat comprising a life vest pouch as described herein.

In a further aspect of the present invention, there is provided a row of airline seats comprising one or more life vest pouches as described herein.

It will be appreciated that reference to "one or more" includes reference to "a plurality".

Within this specification embodiments have been described in a way which enables a clear and concise specification to be written, but it is intended and will be appreciated that embodiments may be variously combined or separated without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figures 1A, 1B and 1C show a first example of the present invention; and
Figures 2A and 2B show a second example of the present invention.

The present invention relates to life vest pouches for use in aircraft.

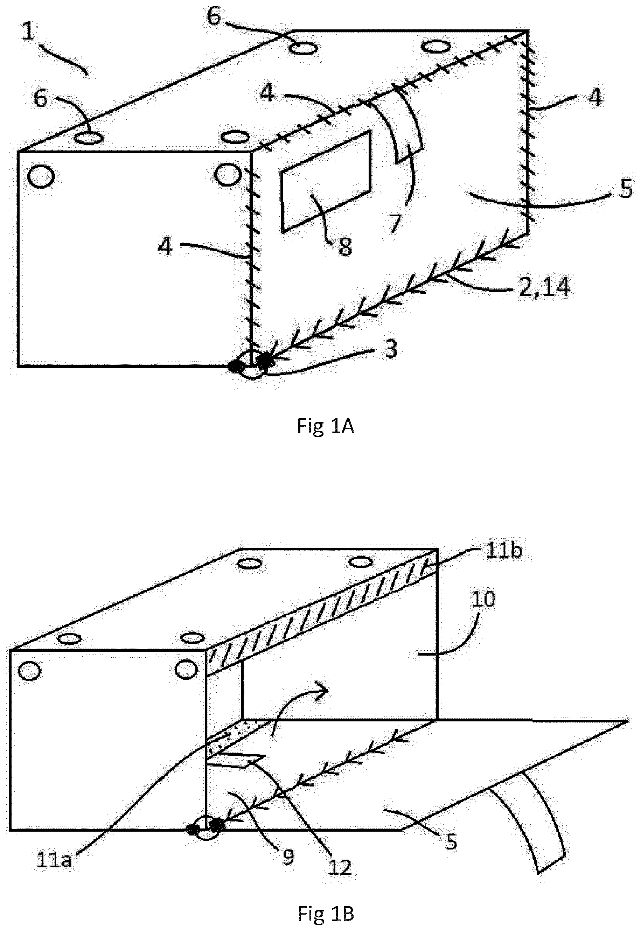

With reference to Figures 1A to 1C, there is shown a life vest pouch 1 for storage under an aircraft seat (not shown). The life vest pouch 1 has a closeable first opening 14 for inserting a life vest (not shown) into the pouch 1. In the example shown, the first opening is sealed by a tamper- evident zip 2 which includes a tamper-evident seal closure mechanism 3.

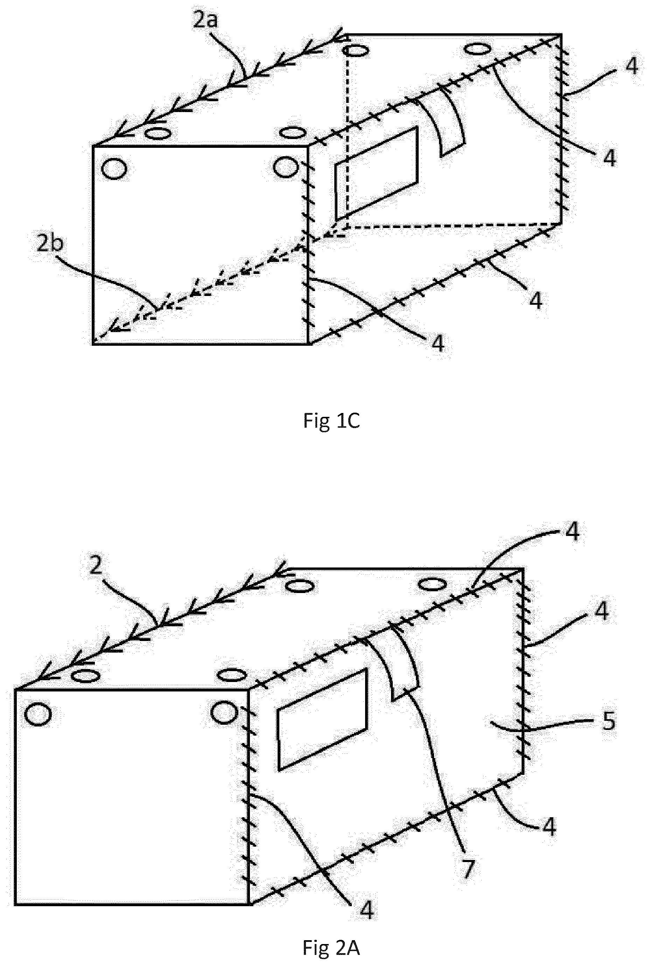

A second opening 10 is formed in the pouch by breakable seams 4, which define a panel 5. In the example shown in Figures 1A and 1B, three sides of the panel 5 are defined by breakable seams 4 and the fourth side of the panel 5 is defined by the zip 2. The seams 4 can be destructively opened manually by application of a known force, for example a force that would typically be applied by a user pulling on the tab 7 provided on the panel 5. This creates a hinged panel 5 which is detachable from the pouch via the zip 2. However, as shown in Figure 1C, the zip 2 can be provided in different locations, for example along different edges of the pouch 1. In these examples, the breakable seams 4 can define all four sides of the panel (as shown in Figure 1C). With reference to Figure 1C, the alternative locations for the zip 2 are depicted as 2a and 2c.

In use, a life vest is inserted into the pouch through the first opening 14 and the first opening 14 is then closed. The pouch is secured to the underside of an aircraft seat via eyelets 6 with the breakable seams 4 positioned to allow removal of the life vest when the seams are broken.

A tag 7 is provided for a user to pull and so break the seams 4 and open the second opening 10.

On the outside of the pouch 1, an information panel 8 is provided upon which information such as the expiry date of the life vest can be provided.

Once the seams 4 have been broken, it will be immediately evident to someone inspecting the pouch 1 that it has been opened. For example, with reference to Figure 1B, the internal surfaces of the pouch 1, seen through the second opening 10, can be provided in bright colours, which are visually distinct from the outside of the pouch.

In the example shown, a second closure means, in the form of a rectangular flap 9, is provided within the pouch. When the panel 5 has been opened or removed, the flap 9 can be positioned over the second opening 10 to re-close the pouch 1. Whilst this allows the pouch 1 to continue to be used as a life vest pouch until such time as it is replaced, the flap 9 is also provided in bright colours, which are visually distinct from the outside of the pouch 1. This means that it will be immediately evident to someone inspecting the pouch 1 that the second opening 10 has been opened.

The flap 9 is provided with a Velcro strip 11a for attachment to a Velcro strip 11b on the pouch adjacent the second opening 10. In the example shown, the Velcro strip 11a is provided on the underside of the flap such that it can attach to Velcro strip 11b on the pouch. It is envisaged that alternative re-sealable closure means can also be provided on the flap 9, such as a suitable adhesive.

A tab 12 is provided on the flap 9 to assist movement of the flap to a position, which covers the second opening 10.

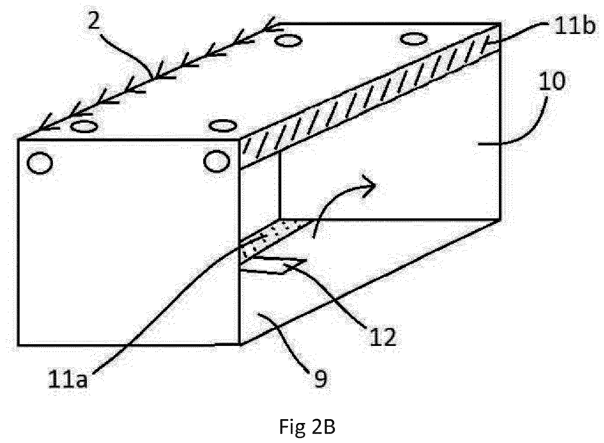

With reference to Figures 2A and 2B, a second example of the present invention is shown. The second example differs from the first example (shown in Figures 1A and 1B) in that the first opening 14 is permanently closeable and the breakable seams 4 define a detachable panel 5.

Permanent closure of the first opening 14 is achieved, in the example shown, by the use of a unidirectional zip 2. This means that once the first opening 14 has been closed, it cannot then be re-opened.

This is particularly advantageous, because there is no need to provide the first opening 14 with a tamper evident closure. Once a life vest has been inserted into the pouch 1 and the first opening 14 permanently closed, the life vest can only exit the pouch 1 through the second opening 10.

Whilst a unidirectional zip is used in the example shown, it will be appreciated that any suitable method of permanently closing the first opening 14 can be used. For example, adhesive strips could be used which, when provided on the inside of the pouch 1 adjacent the first opening 14 and squeezed together, permanently seal the first opening 14. Equally, the first opening 14 could be provided with a flap, which can be permanently secured over the first opening 14.

With further reference to Figure 2A, the breakable seams 4 define a removable panel 5. When the seams 4 are broken by a user pulling on the tab 7, the panel 5 detaches from the pouch 1 to leave the second opening 10, as shown in Figure 2B. As described above in relation to Figure 1B, the brightly coloured internal flap 9 can be positioned to re-close the second opening 10 to allow the pouch 1 to continue to be used until such time as it can be replaced.

The present invention provides life vest pouches for use on commercial airliners which fulfil all of the normal functions of a life vest pouch. The life vest pouch is designed to provide, not only a tamper evident device that is destroyed when it is opened but also the life vest pouch itself is irreparably and conspicuously damaged. The life vest pouch can display the expiry date of a life vest contained within the pouch so that it can be checked easily.

In one example, a sealed life vest pouch is provided with at least one seam sewn such that it can be destructively opened manually by application of a known force. A life vest is inserted through a zip which is secured closed and has a means of determining whether it has been opened, such as a tamper evident seal.

The life vest pouch is re-closable with Velcro once it has been opened to allow the life-vest to "burst" therefrom; but is then highly conspicuous by virtue of a brightly coloured fabric, which is impossible to hide because some of the life vest pouch is detached on first opening.

In another example, a sealed life vest pouch is provided with at least one seam sewn such that it can be destructively opened manually by application of a known force. The life vest is inserted through a unidirectional zip, wherein the unidirectional zip cannot be re-opened once it has been closed.

As with the first example, the life vest pouch is re-closable with Velcro once it the pouch has been opened to allow allows the life-vest to "burst" therefrom; but is then highly conspicuous by virtue of a brightly coloured fabric, which is impossible to hide because some of the life vest pouch is detached on first opening.

The life vest pouch of the present invention is a single use life vest pouch which is tamper evident.

The present invention includes the following embodiments.
1. A life vest pouch for storage under an aircraft seat, the life vest pouch comprising a closeable first opening for inserting a life vest into the pouch and a breakable seam for creating a second opening and permitting removal of a life vest from the pouch.
2. A life vest pouch according to embodiment 1, wherein the pouch comprises a tag for causing the breakable seam to break when a user pulls on the tag.
3. A life vest pouch according to embodiment 1 or 2, wherein the breakable seam comprises stitching and/or perforations.
4. A life vest pouch according to any preceding embodiment, wherein the first opening comprises a tamper evident closure.
5. A life vest pouch according to any preceding embodiment, wherein the first opening comprises a zip.
6. A life vest pouch according to any preceding embodiment, wherein the first opening comprises a tamper evident zip.
7. A life vest pouch according to any preceding embodiment, wherein the first opening is permanently closeable.
8. A life vest pouch according to embodiment 7, wherein the first opening comprises a unidirectional zip moveable from an open to a closed configuration only.
9. A life vest pouch according to embodiment 7 or 8, wherein the first opening comprises a permanent seal.
10. A life vest pouch according to any preceding embodiment, wherein at least one internal surface of the life vest pouch is visually distinct from the external surface of the life vest pouch.
11. A life vest pouch according to embodiment 10, wherein the at least one internal surface of the life vest pouch is visible when the seam is broken.
12. A life vest pouch according to any preceding embodiment, wherein the pouch comprises a second opening closure means removable from the pouch when the seam is broken and positionable over and/or across the second opening.
13. A life vest pouch according to embodiment 12, wherein the closure means comprises a cover positionable over and/or across the second opening.
14. A life vest pouch according to embodiment 12 or 13, wherein the closure means comprises a hinged closure panel moveable from a first position within the pouch to a second position across the second opening.
15. A life vest pouch according to any of embodiments 12 to 14, wherein the closure means comprises a securing means for securing the closure means over and/or across the second opening.
16. A life vest pouch according to embodiment 15, wherein the closure means comprises a hinged closure panel moveable from a first position within the pouch to a second position across the second opening, said panel being hinged at a first side of the second opening and securable to the opposite side of the opening by the securing means.
17. A life vest pouch according to any of embodiments 12 to 16 wherein the closure means comprises a tab for positioning the closure means over and/or across the second opening.
18. A life vest pouch according to any of embodiments 12 to 17, wherein the closure means is visually distinct from the external surface of the life vest pouch.
19. A life vest pouch according to any preceding embodiment, wherein the breakable seam defines a panel.
20. A life vest pouch according to any preceding embodiment, wherein the breakable seam defines a removable panel.
21. A life vest pouch according to any preceding embodiment, wherein the breakable seam defines a hinged panel.
22. A life vest pouch according to any preceding embodiment, wherein the pouch is substantially cuboidal in shape, the first opening is provided along one or more edges of the pouch and the second opening is provided along a different edge of the pouch.
23. A life vest pouch according to any preceding embodiment, wherein the pouch is substantially cuboidal in shape, the first opening is provided along one edge of the pouch and the second opening is formed by a breakable seam positioned along at least three edges of a panel of the pouch.
24. A life vest pouch according to embodiment 23, wherein the breakable seam is positioned along four edges of a panel of the pouch.
25. A life vest pouch according to any preceding embodiment comprising a life vest.
26. An airline seat comprising a life vest pouch according to any preceding embodiment.
27. A row of airline seats comprising one or more life vest pouches according to any of embodiments 1 to 25.

It should be understood that various changes and modifications to the presently preferred embodiments described herein will be apparent to those skilled in the art. Such changes and modifications can be made without departing from the spirit and scope of the present invention and without diminishing its attendant advantages. It is therefore intended that such changes and modifications are covered by the appended claims.

## Claims

1. A life vest pouch for storage under an aircraft seat, the life vest pouch comprising a closeable first opening for inserting a life vest into the pouch and a breakable seam for creating a second opening and permitting removal of a life vest from the pouch.

2. A life vest pouch according to claim 1, wherein the pouch comprises a tag for causing the breakable seam to break when a user pulls on the tag, and/or wherein the breakable seam comprises stitching and/or perforations.

3. A life vest pouch according to any preceding claim, wherein the first opening comprises a tamper evident closure, and/or wherein the first opening comprises a zip, and/or wherein the first opening comprises a tamper evident zip.

4. A life vest pouch according to any preceding claim, wherein the first opening is permanently closeable.

5. A life vest pouch according to claim 4, wherein the first opening comprises a unidirectional zip moveable from an open to a closed configuration only.

6. A life vest pouch according to claim 4 or 5, wherein the first opening comprises a permanent seal.

7. A life vest pouch according to any preceding claim, wherein at least one internal surface of the life vest pouch is visually distinct from the external surface of the life vest pouch, optionally wherein the at least one internal surface of the life vest pouch is visible when the seam is broken.

8. A life vest pouch according to any preceding claim, wherein the pouch comprises a second opening closure means removable from the pouch when the seam is broken and positionable over and/or across the second opening.

9. A life vest pouch according to claim 8, wherein the closure means comprises a cover positionable over and/or across the second opening, and/or (i) wherein the closure means comprises a hinged closure panel moveable from a first position within the pouch to a second position across the second opening, and/or (ii) wherein the closure means comprises a securing means for securing the closure means over and/or across the second opening, optionally wherein the closure means comprises a hinged closure panel moveable from a first position within the pouch to a second position across the second opening, said panel being hinged at a first side of the second opening and securable to the opposite side of the opening by the securing means, and/or (iii) wherein the closure means comprises a tab for positioning the closure means over and/or across the second opening, and/or (iv) wherein the closure means is visually distinct from the external surface of the life vest pouch.

10. A life vest pouch according to any preceding claim, wherein the breakable seam defines a panel, and/or wherein the breakable seam defines a removable panel, and/or wherein the breakable seam defines a hinged panel.

11. A life vest pouch according to any preceding claim, wherein the pouch is substantially cuboidal in shape, the first opening is provided along one or more edges of the pouch and the second opening is provided along a different edge of the pouch.

12. A life vest pouch according to any preceding claim, wherein the pouch is substantially cuboidal in shape, the first opening is provided along one edge of the pouch and the second opening is formed by a breakable seam positioned along at least three edges of a panel of the pouch, optionally wherein the breakable seam is positioned along four edges of a panel of the pouch.

13. A life vest pouch according to any preceding claim comprising a life vest.

14. An airline seat comprising a life vest pouch according to any preceding claim.

15. A row of airline seats comprising one or more life vest pouches according to any of claims 1 to 13.
